(19) **Europäisches Patentamt European Patent Office Office européen des brevets**

(11) **EP 1 857 901 B1**

(12) **EUROPEAN PATENT SPECIFICATION**

(45) Date of publication and mention
of the grant of the patent:
**22.07.2009 Bulletin 2009/30**

(51) Int Cl.:
***G05B 19/404*** *(2006.01)*

(21) Application number: **06010330.6**

(22) Date of filing: **19.05.2006**

(54) **Improved method for controlling a robot TCP**

Verbessertes Verfahren zur Steuerung eines Roboter-TCP

Procédé de commande améliorée d'un robot TCP

(84) Designated Contracting States:
**DE FR**

(43) Date of publication of application:
**21.11.2007 Bulletin 2007/47**

(73) Proprietor: **ABB AS**
**1396 Billingstad (NO)**

(72) Inventors:
• **Krogedal, Arnulf**
**4322 Sandnes (NO)**

• **Tjølsen, Jan Inge**
**4032 Stavanger (NO)**

(74) Representative: **Dahlstrand, Björn**
**ABB AB**
**Intellectual Property**
**Ingenjör Bååths Gata 11**
**721 83 Västerås (SE)**

(56) References cited:
| EP-A- 1 468 775 | EP-A1- 0 432 274 |
| DE-A1- 4 101 422 | DE-A1- 4 430 234 |
| JP-A- 4 195 609 | US-A- 5 645 884 |

## Description

TECHNICAL FIELD.

The invention concerns industrial painting systems, such as automated systems for painting automobiles. In particular it concerns a method for controlling a paint applicator while applying paint in an automated painting process and a system for carrying out that method.

TECHNICAL BACKGROUND

Industrial robots with an arm or manipulator are often used to paint objects such as automobiles in industrial painting processes. When painting an object surface using a robot or manipulator arm it is desirable to move an applicator over the surface to be painted with a constant velocity in order to ensure good quality of the paint result. It has been common practice when a traditional type paint spray gun was used to switch the paint flow on-off with spray gun trajectory. Thus it was possible to switch paint off as the spray gun left the object to be painted, let the spray gun trajectory make a turn or U-turn, and then switch paint on again when the spray gun was back over the object and had reached full (programmed) velocity.

For paint process reasons such as transfer efficiency and paint gloss, etc. the bell applicator is used for robot-painting today much more than traditional spray gun type applicators. A drawback with the bell applicator is that the control of paint flow is slower, with the result that it is not practical to switch paint on/off synchronously with applicator trajectory. The preferred solution for a bell applicator is to let the paint flow continuously, and aim at keeping speed over the surface as constant as possible during the painting program.

This requires a very high bandwidth of the robot servo motors powering the robot joints and wrist which, for some movements e.g. a U-turn. It requires the motors in all of the robot joints involved to accelerate and decelerate at very high rates. It is complex and expensive to design a robot to such specifications including for example very high acceleration capabilities.

US patent 5645884 describes a method for utilizing a stored representation of a surface of a three-dimensional object and selecting a coatings application path of points along the surface

SUMMARY OF THE INVENTION

According to one or more embodiments of the present invention an improvement is provided to methods for controlling a robot arm or manipulator for painting an object.

According to embodiments of the present invention one or more improved methods for controlling a robot Tool Centre Point (TCP) are described. A paint spray gun or applicator carried by a robot is normally passed over the surface to be painted and oriented perpendicular to the plane of the surface. However, the inventors have found that paint process is not very critical with regards to limited deviation in orientation of the applicator, so that by allowing for and planning for a certain deviation from an ideal or perpendicular position in programmed orientation a kinematic redundancy can be obtained.

According to an aspect of the present invention a method for painting a workpiece with an automated painting system comprising an industrial robot or manipulator arm arranged with a wrist section and carrying a paint applicator arranged on said wrist section of said manipulator arm is provided, in which said paint applicator is arranged to coat a surface on said workpiece, and where paint is applied to a substantially circular or elliptical area on said surface, and the centre of said area being defined as a Tool Centre Point, and where said wrist section is arranged capable of orienting said paint applicator and in which method said paint applicator is moved by said manipulator arm so that the Tool Centre Point moves along a planned path so coating a part of said surface, the method further characterised by calculating a planned path comprising one or more turns such that a path taken by a fixed point on the robot wrist above said surface during a turn in the planned path is shorter than a path taken by the Tool Centre Point along said surface.

According to an embodiment an improved method is provided wherein the fixed point on said wrist section is moved during part of the movement through a bend in the planned path with a velocity which is not the same velocity as that of the Tool Centre Point along the planned path.

According to another embodiment an improved method is provided wherein a velocity of the fixed point on the robot wrist along the planned path is controlled to be substantially the same as the velocity of the Tool Centre Point during a part of a straight path and a velocity which is less than the velocity of the Tool Centre Point during a turn in the path.

According to another embodiment an improved method is provided wherein an orientation parameter of said wrist section, being a measure of deviation of the applicator axis from perpendicular to said surface, is optimised during movement in the planned path to one or more values different from the value of the orientation parameter during movement of said wrist section along a straight part of the planned path.

According to another embodiment an improved method is provided wherein the orientation parameter is optimised during movement in the planned path dependent on a position of the fixed point on the robot wrist relative to a part of the path comprising: a straight approach to a bend; a bend; a straight part upon leaving the bend, a straight part of the path.

According to another embodiment an improved method is provided wherein the Tool Centre Point is maintained at a constant or near constant velocity during movement through the bend in the planned path.

According to another embodiment an improved method is provided wherein the velocity of said wrist section is increased on completing the bend in the planned path by adding a positive orientation deviation in the first x direction and a negative orientation deviation in the second y direction to said wrist section.

According to one or more other embodiments an improved method is provided wherein a path for said wrist section is constrained by the optimised constant or near constant velocity of the Tool Centre Point and for one or more joints of said manipulator arm by a limit of any from the group of: a joint angle, an angular velocity, and angular acceleration, a torque.

According an embodiment an improved method is provided wherein information concerning a Tool Centre Point and/or a Wrist Centre Point is displayed on a graphic user interface for the purpose of programming, monitoring, or controlling a said industrial robot or manipulator arm carrying a paint applicator.

According to another aspect of the invention, a system is provided for painting a workpiece with an automated painting system comprising an industrial robot or manipulator arm arranged with a wrist section and carrying a paint applicator arranged on said wrist section of said manipulator arm, said paint applicator arranged to coat a surface on said workpiece, where paint is applied to a substantially circular or elliptical area on said surface, and the centre of said area being defined as a Tool Centre Point, and where said wrist section is arranged capable of orienting said paint applicator and in which method said paint applicator is moved by said manipulator arm so that the Tool Centre Point moves along a planned path so coating a part of said surface, and by means for controlling said robot or manipulator arm to operate according to a planned path, wherein said system comprises by means for calculating a planned path comprising one or more turns such that a path taken by a fixed point on the robot wrist (WCP) above said surface is shorter than a path taken by the Tool Center Point (TCP) along said surface.

A prime advantage of the improved method and system for carrying out the method is that painting with an industrial robot may be carried out more quickly. Coverage can be achieved more quickly by providing faster movement of the robot through turns or bends in the paint path. Another technical advantage of the improved method is that by maintaining a constant velocity through the bend a more uniform coating or paint thickness on the surface is achieved.

Paint wastage is also reduced by means of the improved method which is another very important advantage is that. Overspray, coating that continues while the applicator is not directly above the surface to be coated, is eliminated. This feature greatly reduces waste of paint, with all the environmental benefits that follow from that.

Continuous application is maintained, which reduces the necessity for cleaning and flushing the applicator or supply lines, also resulting in reduced paint waste and solvent use.

Another advantage is that rapid painting may be achieved by use of the described control methods which do not require investment in higher performance robots or robot servo motors for particular joints.

In another aspect of the invention the method offers extended opportunities for optimisation. When details about the dynamics of the robot are also known (a robot has normally different acceleration capability in different directions and in different positions of the working envelope), then this knowledge can be utilised in the path planning to generate a TCP trajectory that is optimised with regards to constant velocity for the TCP during U-turns.

In another development the invention is used with robot arranged with a modified robot wrist. The modification comprises that the wrist axes are lighter in weight. When the inventive control methods are employed together with the higher bandwidth of the lighter wrist axes this provides a significantly higher bandwidth of the overall resulting TCP motion.

In a preferred embodiment of the method of the invention the method may be carried out by a computing device comprising one or more microprocessor units or computers. The control unit(s) of the robot and/or automated painting system comprise memory means for storing one or more computer programs for carrying out the improved methods for controlling the operation of a mechanical press. Preferably such computer programs contain instructions for the processor to perform the method as mentioned above and described in more detail below. In another embodiment the computer program is provided on a computer readable data carrier such as a DVD, an optical or a magnetic data device.

BRIEF DESCRIPTION OF THE DRAWINGS

Embodiments of the invention will now be described, by way of example only, with particular reference to the accompanying drawings in which:

FIGURE 1a-c and Figure 1f are schematic diagrams related to an improved method for controlling paint applicator according to an embodiment of the invention; FIGURE 1e, is a schematic diagram for an ideal movement from a controlled paint applicator which may not be attainable in practice;

FIGURE 1d, Prior Art, is a schematic diagram is showing a known method for controlling paint applicator according to the prior art;

FIGURE 2 is a schematic diagram showing a robot carrying a paint applicator in a system according to an embodiment of the invention.

## DETAILED DESCRIPTION OF THE EMBODIMENTS

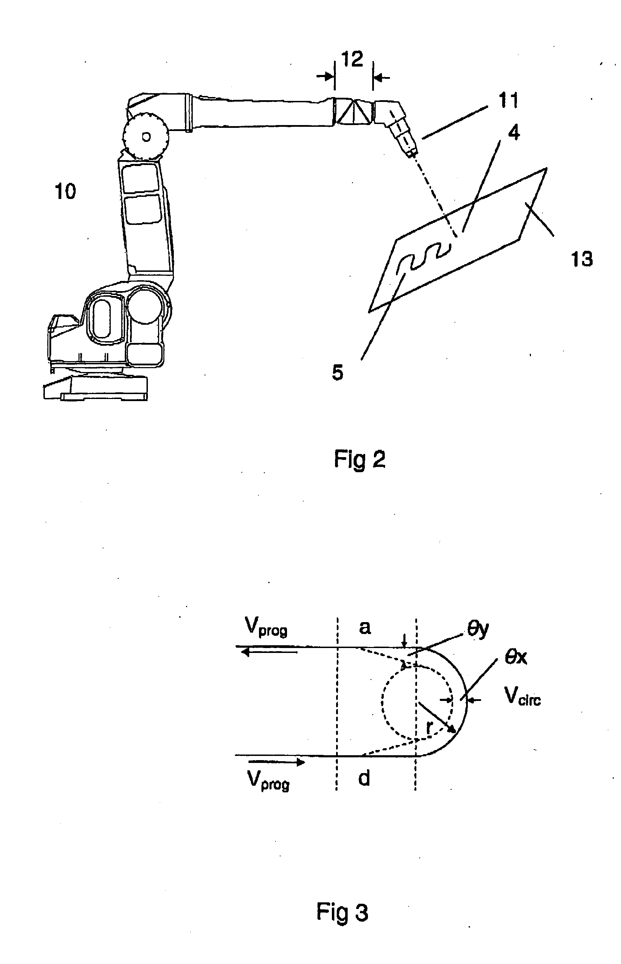

Figure 2 shows schematically an industrial robot carrying a paint applicator. The figure shows a robot 10 with an arm carrying a paint applicator 11. The paint applicator is attached to a wrist part 12 arranged on the robot arm. The figure also shows an object with a surface 13 which is to be painted. A planned paint path 5 is indicated on the surface of the object. A centre line of the applicator drawn between the applicator 11 and the surface to be painted intersects with the surface at a point, and this point is called the Tool Centre Point 4.

The robot moves the arm and the wrist and orients (points) the applicator 11 so that the tool centre point follows the preprogrammed path 5 on the object surface. In this diagram the paint applicator is shown at an angle which is approximately perpendicular to the plane of the paint surface. In other words, the orientation of the paint applicator is perpendicular relative the surface to be painted. Normally a fixed point on the wrist, the Wrist Centre Point WCP, and the TCP are all be aligned in one single orientation.

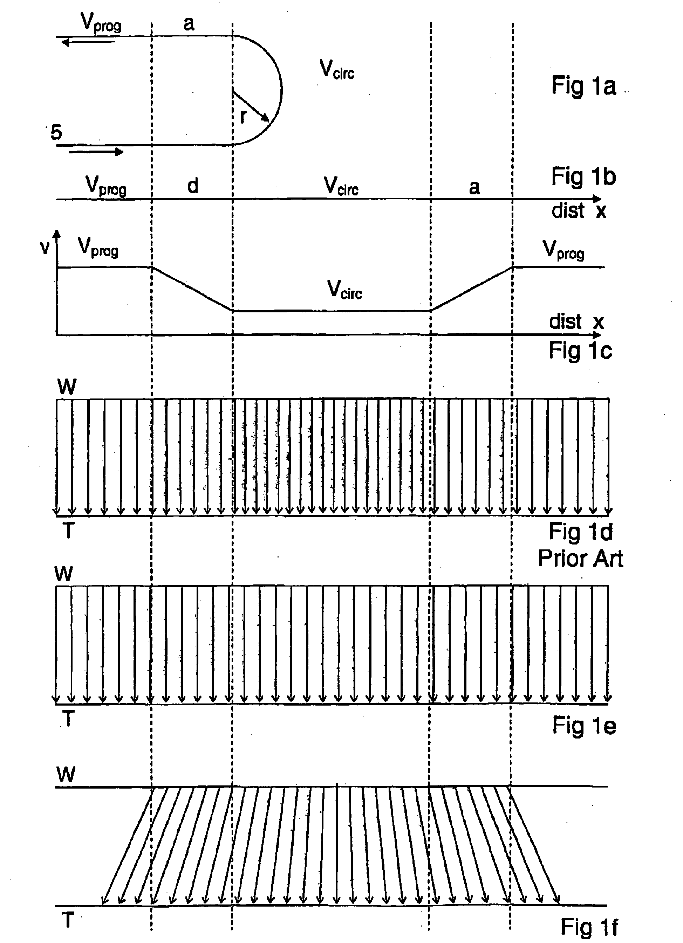

Figure 1 shows a series of schematic diagrams to explain one or more methods of the invention, which is primarily shown in figure 1f. Figure 1a shows a semicircular bend in a planned paint path 5. As described above, the Tool Centre Point is a point on the paint surface. To be more precise the TCP is the centre point on the surface of a substantially circular or elliptical layer of paint applied to the surface. In this description, the term Wrist Centre Point (WCP) is used to describe a designated fixed point on the robot wrist. WCP is sometimes described as the point (position) inside a spherical robot wrist at which all the three wrist axes intersect. The WCP is a concept in modelling of the robot kinematics. The WCP may also be referred to as if the WCP is a point on the applicator, and more precisely a point which is much closer to the wrist than it is to the TCP. In this description the term Wrist Centre Point (WCP) is used to describe a given fixed point which may be constructed as any of: a fixed point on the end of the robot arm, on the robot wrist, or on the applicator.

Figure 1 a shows the planned path 5 which includes a U-turn. Due to the limited acceleration capability of the robot, the programmed velocity of the WCP cannot be maintained during the half circle of the turn or bend.

Using centripetal acceleration

$$a = \frac{V^2}{r} \quad =>$$

$$\text{Max velocity, } V_{circ} = \sqrt{a\_a * r}$$

where a_a is the available acceleration, and r is the radius.

The programmed velocity Vprog is reduced to a maximum velocity Vcirc during a deceleration phase d before the circular path is entered. Velocity Vcirc is then increased after the circular path is finished by acceleration a up to Vprog.

Figure 1b is the planned path 5 from Fig 1a represented as a straight line. This line may be regarded as the basis for the x axis of diagrams Figs 1c-f.

Figure 1c (Prior Art) shows the velocity profile versus distance for the TCP (Tool Centre Point) and WCP points according to prior art. Strictly speaking the indicated velocity is not completely accurate in the acc/de-acc phases, because it is graphed as if the abcissa was time (linear), whereas, since the abcissa is distance, it should have been shown as a parabolic function of the form:

$$V = \sqrt{2 * a * s}$$

However the linear acc/deacc representation is sufficient to describe the context of the technical functions carried out in embodiments of the invention.

Figure 1d (Prior Art) shows a prior art method. The upper line W shows the position of the WCP along the stretched out path at equally spaced time instants. The lower line T is the corresponding position of the TCP at the same instants. The arrow or vector from W to T indicates the orientation of the paint spray (the robot tool) which in this case is perpendicular to the path. The schematic diagram is not to scale, however, it is intended to show that it should be possible to identify the different phases by looking at the distances and variation in distance between the arrows.

Figure 1e shows an ideal or desired path which may, in practice, not be possible to attain exactly. The figure indicates a constant speed through the U-turn. The diagram also shows Fig 1e to have a smaller number of arrows (vectors) than the diagram of Fig 1d, which represents then that traversing the path of Fig 1e will require more time (at the same velocity).

Figure 1f illustrates a planned path according to an embodiment of the invention. While approaching the U-turn, the WCP will have a lead relative to the TCP resulting in a deviation in orientation, which is visualized here by deviation from the perpendicular. The WCP is allowed to decelerate, d, make the circle and accelerate a, while the TCP runs with constant speed indicated by equal spacing between the arrows at the TCP line.

At the completion of the bend the WCP lags behind the TCP. This gives a deviation in orientation with the opposite sign to that of the start, ie the approach to the turn. The WCP lag must be handled by the next paint stroke, so that the WCP is once more leading the TCP again at the time when it approaches the next U-turn.

Thus the planned path includes or permits a deviation in orientation from a planned orientation of the applicator. Instead of the normal orientation perpendicular to the plane of the surface to be painted, the applicator is tilted when it is moved through a bend, expressed more precisely as a deviation in orientation of the WCP while the TCP follows the planned path exactly.

Figure 3 shows the figure of 1a with deviations in orientation indicated in terms of x and y. Thus, and in comparison to Fig 1a, the figure also shows with a dashed line inside the solid line path planned for the TCP. The path shown with the dashed line schematically represents a WCP path. In this example, the path deviates in both the x direction, indicated as amount θx, and also in the y direction, indicated as θy. The WCP in this example follows a shorter path with deviations in both x and y directions. It is also possible to have a shorter path that deviates in the x direction only, ie, the WCP path runs inside of the TCP path on the bend, and so has a radius of less than r. However the straight WCP path would then not be "inside" the straight TCP path during the constant or near constant Vprog speed or the acceleration/deceleration parts of the straight parts of the path.

It can be seen that in the deceleration phase, the x deviation becomes greater than zero, as indicated by the dashed line in Fig 1a. A y deviation may also be applied during deceleration. Deviation in x may vary between zero and a maximum θx,m during deceleration. When the WCP enters the turn, the y deviation goes to a maximum θy,m, and varies during the turn between yθ, m positive and yθ,m maximum negative. On leaving the turn the WCP velocity is too low and must be accelerated. The x deviation of from minus maximum θx is increased to a zero x deviation.

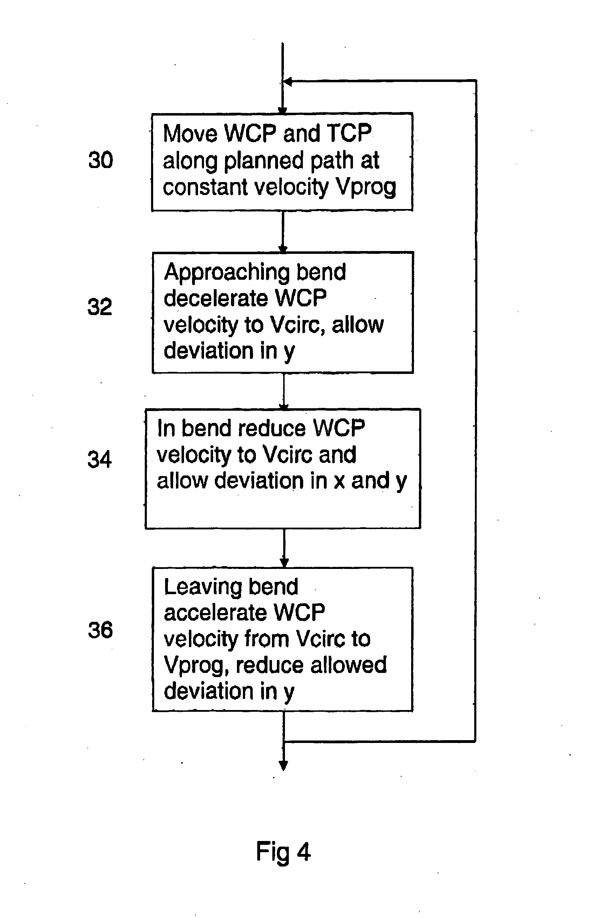

Figure 4 shows a flowchart for a method according to an embodiment. The flowchart shows the method to comprise actions for moving the paint applicator 11 in terms of movements of the wrist section WCP and the spray area TCP in the following schematic blocks:

> 30 move the WCP and TCP at a constant (max) velocity Vprog along the planned path;
> 32 if approaching bend, decelerate (d) WCP and reduce velocity to a maximum Vcirc, allow deviation in x up to a max of +ve θx, m,
> 34 in the bend maintain constant velocity Vcirc for WCP, reduce allowed deviation in x to change between +ve θx,m, to zero, and allow deviation in y from between - θy,m, up to +ve θy,m,;
> 36 on leaving the bend accelerate WCP from Vcirc up to Vprog and increase allowed x deviation from -ve θx,m, to zero.

The planned path has only been shown in the accompanying figures in terms of a planned paint path over a flat surface with two dimensions x and y. However, the methods described may also be applied to surfaces that are not flat and surfaces which may include concave or convex shapes.

In another embodiment, the planned path which includes or permits deviation in orientation by the WCP may be optimised according to one or more other constraints. The WCP path is calculated by optimising a path for the wrist section while aiming for a constant or near constant velocity for the TCP and optimising for one or more of the following criteria:

> minimum total energy consumption for the robot joints involved
> minimum weighted energy consumption for the robot joints involved
> minimum total acceleration for the joints involved,
> minimum weighted acceleration for the joints involved,
> minimum total angular movement for the robot joints,
> minimum weighted angular movement for the robot joints,
> minimum linear acceleration of the WCP,
> minimum deviation in orientation versus programmed orientation.

There are several variations and modifications which may be made to the disclosed solutions, and embodiments of the invention may also be used to coat different types of paint, two-component paint, basecoat, primer, clearcoat and so on. Similarly the above described solutions may also be adapted to coat or spray other substances such as protective coatings, sealants, adhesives and even abrasive materials.

Methods of the invention may be supervised, controlled or carried out by one or more computer programs. One or more microprocessors (or processors or computers) comprise a central processing unit CPU connected to or comprised in the paint application system described, which processors, PLCs or computers perform the steps of the methods according to one or more aspects of the invention, as described for example with reference to Figure 4. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations and the like for the methods previously described, and for example in relation to the flowchart of Figure 4. The computer program may include one or more small executable program such as a Flash (Trade mark) program. A part of the program may be stored in a processor as above, but also in a ROM, RAM, PROM, EPROM or EEPROM chip or similar memory means. The or some of the programs in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as Sony memory stick (TM), a USB memory stick and other removable flash memories, hard drives etc. may also be used. The program may also in part be supplied from a data network, including a public network such as the Internet. The computer programs described may also be arranged in part as a distributed application capable of running on several different computers or computer systems at more or less the same time.

It is also noted that while the above describes exemplifying embodiments of the invention, there are several variations and modifications which may be made to the disclosed solution without departing from the scope of the present invention as defined in the appended claims.

**Claims**

1. A method for painting a workpiece with an automated painting system comprising an industrial robot or manipulator arm (10) arranged with a wrist section (12) and carrying a paint applicator (11) arranged on said wrist section of said manipulator arm, said paint applicator arranged to coat a surface (13) on said workpiece, where paint is applied to a substantially circular or elliptical area on said surface, and the centre of said area being defined as a Tool Centre Point, and where said wrist section is arranged capable of orienting said paint applicator and in which method said paint applicator is moved by said manipulator arm so that the Tool Centre Point (4) moves along a planned path (5) so coating a part of said surface, **characterised by** calculating said planned path comprising one or more turns such that a path taken by a fixed point on the robot wrist (WCP) above said surface during a turn in said planned path deviates in x-direction and/or y-direction from the planned path, and the path taken by a fixed point on the robot wrist (WCP) is shorter than said planned path taken by the Tool Centre Point (TCP) along said surface.

2. A method according to claim 1, wherein the fixed point on said wrist section (WCP) is moved during part of the movement through a bend in the planned path with a velocity ($V_{CIRC}$) which is not the same velocity as that of the Tool Centre Point ($V_{PROG}$) along the planned path.

3. A method according to claim 1 or 2, wherein a velocity of the fixed point on the robot wrist (WCP) along the planned path is controlled to be substantially the same as the velocity (Vprog) of the Tool Centre Point (TCP) during a part of a straight path and a velocity (Vcirc) which is less than the velocity of the Tool Centre Point during a turn in the path.

4. A method according to any preceding claim, wherein an orientation parameter ($WCP_{deviation}$) of said wrist section, being a measure of deviation of the applicator axis from perpendicular to said surface, is optimised during movement in the planned path to one or more values different from the value of the orientation parameter during movement of said wrist section along a straight part ($WCP_{deviacion} => 0°$) of the planned path.

5. A method according to claim 4, wherein the orientation parameter ($WCP_{deviation}$) is optimised during movement in the planned path dependent on a position of the fixed point on the robot wrist (WCP) relative to a part of the path comprising: a straight approach to a bend; a bend; a straight part upon leaving the bend, a straight part of the path.

6. A method according to claim 4 or 5, wherein the orientation deviation of said wrist section (WCP) during movement through the bend in the planned path may be optimised to a value lying between a negative deviation ($-\vartheta_y, -\vartheta_x$) and a positive deviation ($\vartheta_y, \vartheta_x$).

7. A method according to claim 6, wherein the Tool Centre Point is maintained at a constant or near constant velocity ($V_{CIRC}$) during movement through the bend in the planned path.

8. A method according to claim 7, wherein the velocity of said wrist section during an approach to the bend in the planned path is reduced (d) and an orientation deviation in a first (x) direction is permitted up to a maximum value ($\vartheta_{x,m}$).

9. A method according to claim 8, wherein an orientation deviation in a second (y) direction may be permitted up to a maximum value ($\vartheta_{y,m}$).

10. A method according to claim 8 or 9, wherein the orientation deviation in a first (x) direction of said wrist section (WCP) may be changed from zero up to a maximum ($\vartheta_{x,m}$) and then to zero during movement along the bend.

11. A method according to claim 10 or 9, wherein the orientation deviation in a second (y) direction of said wrist section (WCP) may be changed from a negative maximum ($-\vartheta_{y,m}$) up to positive maximum ($\vartheta_{y,m}$ during movement along the bend.

12. A method according to claim 8, wherein the velocity of said wrist section is increased (a) on completing the bend in the planned path by adding a positive orientation deviation in the first (x) direction and a negative orientation deviation in the second (y) direction to said wrist section.

13. A method according to claim 8 or 1, wherein a path for said wrist section (WCP) is constrained by the optimised constant or near constant velocity ($V_{PROG}$) of the Tool Centre Point and for one or more joints of said manipulator arm by a limit of any from the group of: a joint angle, an angular velocity, an angular acceleration, a torque.

14. A method according to claim 13 or 1, wherein a path for said WCP is calculated by optimising a path for said wrist section constrained by the constant or near constant velocity for TCP and optimising, for example to obtain a minimum value, for one or more from the group of:

total energy consumption for the involved robot joints, weighted energy consumption for the involved robot joints, total acceleration for the involved joints,
weighted acceleration for the involved joints, total angular movement for the robot joints,
weighted angular movement for the robot joints, linear acceleration of the fixed point on the robot wrist (WCP),
deviation in orientation versus programmed orientation.

15. A method according to any preceding claim wherein one or more computer programs are read into a computer or processor causing the computer or processor to carry out a method according to claim 1.

16. A method according to any preceding claim wherein information concerning a Tool Centre Point and/or a Wrist Centre Point is displayed on a graphic user interface for the purpose of programming, monitoring, or controlling a said industrial robot or manipulator arm carrying a paint applicator.

17. A computer program which when read into a computer or processor will cause the computer or processor to carry out a method according to the steps of any of claims 1-16.

18. A computer readable medium comprising a computer program which when read into a computer or processor will cause the computer or processor to carry out a method according to the steps of any of claims 1-16.

19. A system for painting a workpiece with an automated painting system comprising an industrial robot or manipulator arm (10) arranged with a wrist section (12) and carrying a paint applicator (11) arranged on said wrist section of said manipulator arm, said paint applicator arranged to coat a surface (13) on said workpiece, where paint is applied to a substantially circular or elliptical area on said surface, and the centre of said area being defined as a Tool Centre Point (4), and where said wrist section is arranged capable of orienting said paint applicator and in which method said paint applicator is moved by said manipulator arm so that the Tool Centre Point moves along a planned path (5) so coating a part of said surface, and by means for controlling said robot or manipulator arm to operate according to a planned path, **characterised by** means for calculating said planned path (5) comprising one or more turns such that a path taken by a fixed point on the robot wrist (WCP) above said surface during a turn in said planned path deviates in x-direction and/or y-direction from the planned path, and the path taken by a fixed point on the robot wrist (WCP) is shorter than a path taken by the Tool Center Point (TCP) along said surface

20. A system according to claim 19, further comprising means for moving said wrist section (WCP) during part of the movement through a bend in the planned path with a velocity ($V_{CIRC}$) which is not the same velocity as that of the Tool Centre Point along a substantially straight part ($V_{PROG}$) of the planned path.

21. A system according to claim 19 or 20, further comprising means for controlling a velocity of the fixed point on the robot wrist (WCP) along the planned path to be substantially the same as the velocity (Vprog) of the Tool Centre Point (TCP) during a part of a straight path and a velocity (Vcirc) which is less than the velocity of the Tool Centre Point during a bend in the path.

22. A system according to claim 19, further comprising means for optimising an orientation parameter ($WCP_{deviation}$) of said wrist section during movement through a bend in the planned path to a different value from the value of the orientation parameter during movement of said wrist section along a straight part of the planned path.

23. A system according to claim 19, further comprising means for moving said wrist section such that an orientation parameter ($WCP_{deviation}$) being a measure of deviation of the applicator axis from perpendicular to said surface is optimised during movement in the planned path to one or more different values from the value of the orientation parameter during movement of said wrist section along a straight part of the planned path.

24. A system according to claim 19, comprising means for optimising an orientation deviation of said wrist section (WCP) during movement through the bend in the planned path to a value lying between a negative deviation and a positive deviation.

25. A system according to claim 19, comprising means for maintaining the velocity of the Tool Centre Point at a constant ($V_{PROG}$) or near constant velocity during movement through the bend in the planned path.

26. A system according to claim 19, comprising means for reducing (d) the velocity of said wrist section during an approach to the bend in the planned path and/or increasing (a) the velocity of said wrist section on completing the bend in the planned path.

27. A system according to claim 19, comprising means for permitting an orientation deviation in a first (x) direction is permitted up to a maximum value ($\vartheta_{x,m}$) and/or permitting an orientation deviation in a second (y) direction up to a maximum value ($\vartheta_{y,m}$).

28. A system according to claim 19, comprising means for optimising a path for said wrist section while aiming for a constant or near constant velocity for tcp and optimising, for example to obtain a minimum value, for one or more from the group of:

total energy consumption for the involved robot joints, weighted energy consumption for the involved robot joints, total acceleration for the involved joints,
weighted acceleration for the involved joints,
total angular movement for the robot joints,
weighted angular movement for the robot joints,
linear acceleration of the fixed point on the robot wrist (WCP),
deviation in orientation versus programmed orientation.

29. Use of a system according to any of claims 19-28 for controlling or programming an industrial robot to carry out any application or coating task from the list of: applying a conductive or non-conductive fluid material, paint application, paint spraying, dry spraying, applying glue, applying sealant, applying a sealant containing PVC, applying anti-corrosion material, sand blasting or applying sand, applying abrasive material, applying a wax.

**Patentansprüche**

1. Ein Verfahren zum Lackieren eines Werkstücks mit einem automatisierten Lackiersystem umfassend einen Industrieroboter oder Manipulatorarm (10), welcher mit einem Gelenkabschnitt (12) eingerichtet ist und einen Lackapplikator (11) trägt, der an dem Gelenkabschnitt des Manipulatorarms angeordnet ist, wobei der Lackapplikator eingerichtet ist, eine Oberfläche (13) des Werkstücks zu beschichten, wobei Lack auf eine im Wesentlichen runde oder elliptische Fläche auf der Oberfläche aufgebracht wird und das Zentrum der Fläche als ein Werkzeugzentrumspunkt definiert ist, und wobei der Gelenkabschnitt des Ausrichtens des Lackapplikators fähig eingerichtet ist, und in welchem Verfahren der Lackapplikator durch den Manipulatorarm bewegt wird, so dass sich der Werkzeugzentrumspunkt (4) entlang eines geplanten Pfades (5) bewegt, und so einen Teil der Oberfläche beschichtet,
**gekennzeichnet durch** Berechnen des geplanten Pfades, der eine oder mehrere Kurven enthält, so dass ein Pfad, der während einer Kurve in dem geplanten Pfad von einem fixen Punkt auf dem Robotergelenk (WCP) über der Oberfläche genommen wird, in x-Richtung und/oder in y-Richtung von dem geplanten Pfad abweicht, und ein Pfad, der von einem fixen Punkt auf dem Robotergelenk (WCP) genommen wird, kürzer ist als der geplante Pfad, der von dem Werkzeugzentrumspunkt (TCP) entlang der Oberfläche genommen wird.

2. Ein Verfahren nach Anspruch 1, wobei der fixe Punkt auf dem Gelenkabschnitt (WCP) während eines Teils der Bewegung durch eine Kurve in dem geplanten Pfad mit einer Geschwindigkeit ($V_{CIRC}$) bewegt wird, die nicht dieselbe Geschwindigkeit ist wie diejenige des Werkzeugzentrumspunkts ($V_{PROG}$) entlang des geplanten Pfades.

3. Ein Verfahren nach einem der Ansprüche 1 oder 2, wobei eine Geschwindigkeit des fixen Punktes auf dem Robotergelenk (WCP) entlang des geplanten Pfades gesteuert wird, um im Wesentlichen dieselbe zu sein wie die Geschwindigkeit ($V_{PROG}$) des Werkzeugzentrumspunkts (TCP) während eines Teils eines geraden Pfades und wie eine Geschwindigkeit ($V_{CIRC}$), welche geringer ist als die Geschwindigkeit des Werkzeugzentrumspunkts während einer Kurve in dem Pfad.

4. Ein Verfahren nach einem der vorhergehenden Ansprüche, wobei ein Ausrichtungsparameter ($WCP_{deviation}$) des Gelenkabschnitts, welcher ein Maß für die Abweichung der Applikatorachse von der Senkrechten zur Oberfläche ist, während der Bewegung in dem geplanten Pfad zu einem Wert oder mehreren Werten optimiert wird, der/die von dem Wert des Ausrichtungsparameters während einer Bewegung des Gelenkabschnitts entlang eines geraden Teils ($WCP_{deviation}=>0°$) des geplanten Pfades verschieden ist/sind.

5. Ein Verfahren nach Anspruch 4, wobei der Ausrichtungsparamter ($WCP_{deviation}$) während einer Bewegung in dem geplanten Pfad in Abhängigkeit von einer Position des fixen Punktes auf dem Robotergelenk (WCP) relativ zu einem Teil des Pfades optimiert wird, welcher umfasst: eine gerade Annäherung an eine Kurve; eine Kurve; einen geraden Teil beim Verlassen der Kurve, einen geraden Teil des Pfades.

**6.** Ein Verfahren nach einem der Ansprüche 4 oder 5, wobei die Ausrichtungsabweichung des Gelenkabschnitts (WCP) während einer Bewegung durch die Kurve im geplanten Pfad zu einem Wert optimiert werden kann, der zwischen einer negativen Abweichung ($-\theta_y$, $-\theta_x$) und einer positiven Abweichung ($\theta_y$, $\theta_x$) liegt.

**7.** Ein Verfahren nach Anspruch 6, wobei der Werkzeugzentrumpunkt bei einer konstanten oder nahezu konstanten Geschwindigkeit ($V_{CIRC}$) gehalten wird während einer Bewegung durch die Kurve im geplanten Pfad.

**8.** Ein Verfahren nach Anspruch 7, wobei die Geschwindigkeit des Gelenkabschnitts während einer Annäherung an die Kurve im geplanten Pfad vermindert wird (d) und eine Ausrichtungsabweichung in einer ersten (x) Richtung bis zu einem maximalen Wert ($\theta_{x,m}$) erlaubt wird.

**9.** Ein Verfahren nach Anspruch 8, wobei eine Ausrichtungsabweichung in einer zweiten (y) Richtung bis zu einem maximalen Wert ($\theta_{y,m}$) erlaubt werden kann.

**10.** Ein Verfahren nach einem der Ansprüche 8 oder 9, wobei die Ausrichtungsabweichung in einer ersten (x) Richtung des Gelenkabschnitts (WCP) von Null bis zu einem Maximum ($\theta_{x,m}$) und dann zu Null verändert werden kann während einer Bewegung entlang der Kurve.

**11.** Ein Verfahren nach einem der Ansprüche 10 oder 9, wobei die Ausrichtungsabweichung in einer zweiten (y) Richtung des Gelenkabschnitts (WCP) von einem negativen Maximum ($-\theta_{y,m}$) bis zu einem positiven Maximum ($\theta_{y,m}$) verändert werden kann während einer Bewegung entlang der Kurve.

**12.** Ein Verfahren nach Anspruch 8, wobei die Geschwindigkeit des Gelenkabschnitts vergrößert wird (a) beim Vollenden der Kurve im geplanten Pfad durch Hinzufügen einer positiven Ausrichtungsabweichung in der ersten (x) Richtung und einer negativen Ausrichtungsabweichung in der zweiten (y) Richtung zu dem Gelenkabschnitt.

**13.** Ein Verfahren nach Anspruch 8 oder 1, wobei ein Pfad für den Gelenkabschnitt (WCP) beschränkt wird durch die optimierte, konstante oder nahezu konstante Geschwindigkeit ($V_{PROG}$) des Werkzeugzentrumspunkts und für eine oder mehrere Verbindungen des Manipulatorarms durch irgendeine Grenze aus der Gruppe von: einem Verbindungswinkel, einer Winkelgeschwindigkeit, einer Winkelbeschleunigung, einem Drehmoment.

**14.** Ein Verfahren nach Anspruch 13 oder 1, wobei ein Pfad für den WCP berechnet wird durch Optimieren eines Pfades für den Gelenkabschnitt, beschränkt durch die konstante oder nahezu konstante Geschwindigkeit für TCP, und Optimieren, zum Beispiel um einen Minimalwert zu erhalten, hinsichtlich eines oder mehrerer aus der Gruppe von:

Gesamtenergieverbrauch für die involvierten Roboterverbindungen,
gewichteter Energieverbrauch für die involvierten Roboterverbindungen,
Gesamtbeschleunigung für die involvierten Verbindungen,
gewichtete Beschleunigung für die involvierten Verbindungen,
Gesamtwinkelbewegung für die Roboterverbindungen,
gewichtete Winkelbewegung für die Roboterverbindungen,
lineare Beschleunigung des fixen Punktes auf dem Robotergelenk (WCP),
Abweichung in der Ausrichtung gegenüber der programmierten Ausrichtung.

**15.** Ein Verfahren nach einem der vorigen Ansprüche, wobei eines oder mehrere Computerprogramme in einen Computer oder Prozessor gelesen werden und den Computer oder Prozessor veranlassen, das Verfahren nach Anspruch 1 auszuführen.

**16.** Ein Verfahren nach einem der vorigen Ansprüche, wobei Information bezüglich eines Werkzeugzentrumspunkts und/oder eines Gelenkzentrumspunkts auf einem graphischen Benutzerinterface angezeigt wird für den Zweck des Programmierens, Überwachens, oder Steuerns des Industrieroboters oder Manipulatorarms, welcher einen Lackapplikator trägt.

**17.** Ein Computerprogramm, welches, wenn es in einen Computer oder Prozessor gelesen wird, den Computer oder Prozessor veranlasst, ein Verfahren gemäß den Schritten irgendeines der Ansprüche 1-16 auszuführen.

**18.** Ein computerlesbares Medium, welches ein Computerprogramm umfasst, welches, wenn es in einen Computer oder Prozessor gelesen wird, den Computer oder Prozessor veranlasst, ein Verfahren gemäß den Schritten irgendeines der Ansprüche 1-16 auszuführen.

**19.** Ein System zum Lackieren eines Werkstücks mit einem automatisierten Lackiersystem, welches einen Industrieroboter oder Manipulatorarm (10) umfasst, der mit einem Gelenkabschnitt (12) eingerichtet ist und einen Lackapplikator (11) trägt, der auf dem Gelenkabschnitt des Manipulatorarms angeordnet ist, wobei der Lackapplikator eingerichtet ist, eine Oberfläche (13) auf dem Werkstück zu beschichten, wobei Lack auf eine im Wesentlichen runde oder elliptische Fläche auf der Oberfläche aufgebracht wird und das Zentrum der Fläche als ein Werkzeugzentrumspunkt (4) definiert ist, und wobei der Gelenkabschnitt des Ausrichtens des Lackapplikators fähig eingerichtet ist, und in welchem Verfahren der Lackapplikator durch den Manipulatorarm bewegt wird, so dass sich der Werkzeugzentrumspunkt (4) entlang eines geplanten Pfades (5) bewegt, und so einen Teil der Oberfläche beschichtet, und durch Mittel zum Steuern des Roboters oder Manipulatorarms, um gemäß einem geplanten Pfad zu wirken, **gekennzeichnet durch** Mittel zum Berechnen des geplanten Pfades (5), der eine oder mehrere Kurven enthält, so dass ein Pfad, der während einer Kurve in dem geplanten Pfad von einem fixen Punkt auf dem Robotergelenk (WCP) über der Oberfläche genommen wird, in x-Richtung und/oder in y-Richtung von dem geplanten Pfad abweicht, und ein Pfad, der von einem fixen Punkt auf dem Robotergelenk (WCP) genommen wird, kürzer ist als der geplante Pfad, der von dem Werkzeugzentrumspunkt (TCP) entlang der Oberfläche genommen wird.

20. Ein System nach Anspruch 19, welches weiter Mittel umfasst zum Bewegen des Gelenkabschnitts (WCP) während eines Teils der Bewegung durch eine Kurve in dem geplanten Pfad mit einer Geschwindigkeit ($V_{CIRC}$), die nicht dieselbe Geschwindigkeit ist wie diejenige des Werkzeugzentrumspunkts ($V_{PROG}$) entlang eines im Wesentlichen geraden Teils des geplanten Pfades.

21. Ein System nach einem der Ansprüche 19 oder 20, welches weiter Mittel umfasst zum Steuern einer Geschwindigkeit des fixen Punktes auf dem Robotergelenk (WCP) entlang des geplanten Pfades, um im Wesentlichen dieselbe zu sein wie die Geschwindigkeit ($V_{PROG}$) des Werkzeugzentrumspunkts (TCP) während eines Teils eines geraden Pfades und einer Geschwindigkeit ($V_{CIRC}$), welche geringer ist als die Geschwindigkeit des Werkzeugzentrumspunkts während einer Kurve in dem Pfad.

22. Ein System nach Anspruch 19, welches weiter Mittel umfasst zum Optimieren eines Ausrichtungsparameters ($WCP_{deviation}$) des Gelenkabschnitts während der Bewegung durch eine Kurve im geplanten Pfad zu einem Wert, der von dem Wert des Ausrichtungsparameters während einer Bewegung des Gelenkabschnitts entlang eines geraden Teils des geplanten Pfades verschieden ist.

23. Ein System nach Anspruch 19, welches weiter Mittel umfasst zum Bewegen des Gelenkabschnitts, so dass ein Ausrichtungsparameter ($WCP_{deviation}$), welcher ein Maß für die Abweichung der Applikatorachse von der Senkrechten zur Oberfläche ist, während der Bewegung in dem geplanten Pfad zu einem Wert oder mehreren Werten optimiert wird, der/die von dem Wert des Ausrichtungsparameters während einer Bewegung des Gelenkabschnitts entlang eines geraden Teils des geplanten Pfades verschieden ist/sind.

24. Ein System nach Anspruch 19, welches Mittel umfasst zum Optimieren einer Ausrichtungsabweichung des Gelenkabschnitts (WCP) während einer Bewegung durch die Kurve im geplanten Pfad zu einem Wert, der zwischen einer negativen Abweichung und einer positiven Abweichung liegt.

25. Ein System nach Anspruch 19, welches Mittel umfasst zum Halten der Geschwindigkeit des Werkzeugzentrumspunkts bei einer konstanten ($V_{PROG}$) oder nahezu konstanten Geschwindigkeit während einer Bewegung durch die Kurve im geplanten Pfad.

26. Ein System nach Anspruch 19, welches Mittel umfasst zum Vermindern (d) der Geschwindigkeit des Gelenkabschnitts während einer Annäherung an die Kurve im geplanten Pfad und/oder zum Vergrößern (a) der Geschwindigkeit des Gelenkabschnitts beim Vollenden der Kurve im geplanten Pfad.

27. Ein System nach Anspruch 19, welches Mittel umfasst zum Erlauben einer Ausrichtungsabweichung in einer ersten (x) Richtung bis zu einem maximalen Wert ($\theta_{x,m}$) und/oder zum Erlauben einer Ausrichtungsabweichung in einer zweiten (y) Richtung bis zu einem maximalen Wert ($\theta_{y,m}$).

28. Ein System nach Anspruch 19, welches Mittel umfasst zum Optimieren eines Pfades für den Gelenkabschnitt während des Abzielens auf eine konstante oder nahezu konstante Geschwindigkeit für TCP und zum Optimieren, zum Beispiel um einen Minimalwert zu erhalten, hinsichtlich eines oder mehrerer aus der Gruppe von:

> Gesamtenergieverbrauch für die involvierten Roboterverbindungen,
> gewichteter Energieverbrauch für die involvierten Roboterverbindungen,
> Gesamtbeschleunigung für die involvierten Verbindungen,
> gewichtete Beschleunigung für die involvierten Verbindungen,
> Gesamtwinkelbewegung für die Roboterverbindungen,
> gewichtete Winkelbewegung für die Roboterverbindungen,
> lineare Beschleunigung des fixen Punktes auf dem Robotergelenk (WCP),
Abweichung in der Ausrichtung gegenüber der programmierten Ausrichtung.

29. Verwendung eines Systems gemäß einem der Ansprüche 19-28 zum Steuern oder Programmieren eines Industrieroboters, um irgendeine Anwendung oder Beschichtungsaufgabe auszuführen aus der Liste von: Anwenden eines leitenden oder nicht-leitenden fluiden Materials, Lackapplikation, Lacksprühen, Trockensprühen, Anwenden von Klebstoff, Anwenden von Versiegelung, Anwenden einer Versiegelung, die PVC enthält, Anwenden von Antikorrosionsmaterial, Sandstrahlen oder Anwenden von Sand, Anwenden von Abrasivmaterial, Anwenden eines Wachses.

**Revendications**

1. Procédé pour peindre une pièce avec un système de peinture automatisé comprenant un robot industriel ou bras manipulateur (10) pourvu d'une section poignet (12) et portant un applicateur de peinture (11) disposé sur ladite section poignet du bras manipulateur, ledit applicateur de peinture étant adapté pour enduire une surface (13) de ladite pièce, où la peinture est appliquée sur une région sensiblement circulaire ou elliptique de ladite surface, et le centre de ladite région étant défini comme un Point Central d'Outil, et où ladite section poignet est adaptée pour être capable d'orienter ledit applicateur de peinture et ledit applicateur de peinture étant déplacé par le bras manipulateur de sorte que le Point Central d'Outil (4) se déplace le long d'un chemin programmé (5) enduisant ainsi une partie de ladite surface, **caractérisé par** le calcul dudit chemin programmé comprenant un ou plusieurs tournants de sorte qu'un chemin pris par un point fixe sur le poignet de robot (WCP) au-dessus de ladite surface pendant un tournant dans ledit chemin programmé dévie dans la direction x et/ou dans la direction y par rapport au chemin programmé, et le chemin pris par un point fixe sur le poignet du robot (WCP) est plus court que ledit chemin programmé pris par le Point Central d'Outil (TCP) le long de ladite surface.

2. Procédé selon la revendication 1, dans lequel le point fixe sur ladite section poignet (WCP) se déplace pendant une partie du mouvement à travers une courbe dans le chemin programmé avec une vitesse ($V_{CIRC}$) qui n'est pas la même vitesse que celle du Point Central d'Outil ($V_{PROG}$) le long du chemin programmé.

3. Procédé selon la revendication 1 ou 2, dans lequel une vitesse du point fixe sur le poignet de robot (WCP) le long du chemin programmé est commandée pour être sensiblement la même que la vitesse (Vprog) du Point Central d'Outil (TCP) pendant une partie d'un chemin droit et une vitesse (Vcirc) qui est inférieure à la vitesse du Point Central d'Outil pendant un tournant dans le chemin.

4. Procédé selon l'une quelconque des revendications précédentes, dans lequel un paramètre d'orientation ($WCP_{deviation}$) de ladite section poignet, qui est une mesure d'écart de l'axe de l'applicateur par rapport à la perpendiculaire à ladite surface, est optimisé pendant le mouvement dans le chemin programmé sur une ou plusieurs valeurs différentes de la valeur du paramètre d'orientation pendant le mouvement de ladite section poignet le long d'une partie droite ($WCP_{deviation} => 0°$) du chemin programmé.

5. Procédé selon la revendication 4, dans lequel le paramètre d'orientation ($WCP_{deviation}$) est optimisé pendant le mouvement dans le chemin programmé en fonction d'une position du point fixe sur le poignet de robot (WCP) par rapport à une partie du chemin comprenant : une approche droite d'une courbe, une courbe, une partie droite après la courbe, une partie droite du chemin.

6. Procédé selon la revendication 4 ou 5, dans lequel l'écart d'orientation de ladite section poignet (WCP) pendant le mouvement dans la courbe du chemin programmé peut être optimisé sur une valeur comprise entre un écart négatif ($-\theta_y$, $-\theta_x$) et un écart positif ($\theta_y$, $\theta_x$).

7. Procédé selon la revendication 6, dans lequel le Point Central d'Outil est maintenu à une vitesse constante ou presque constante ($V_{CIRC}$) pendant le mouvement dans la courbe du chemin programmé.

8. Procédé selon la revendication 7, dans lequel la vitesse de ladite section poignet pendant une approche de la courbe dans le chemin programmé est réduite (d) et un écart d'orientation dans une première direction (x) est permis jusqu'à une valeur maximale ($\theta_{x,m}$).

9. Procédé selon la revendication 8, dans lequel un écart d'orientation dans une deuxième direction (y) peut être permis jusqu'à une valeur maximale ($\theta_{y,m}$).

10. Procédé selon la revendication 8 ou 9, dans lequel l'écart d'orientation dans une première direction (x) de ladite section poignet (WCP) peut être modifié de zéro à un maximum ($\theta_{x,m}$) puis à zéro pendant le mouvement le long de la courbe.

11. Procédé selon la revendication 10 ou 9, dans lequel l'écart d'orientation dans une deuxième direction (y) de ladite section poignet (WCP) peut être modifié d'un maximum négatif $(-\theta_{y,m})$ à un maximum positif $(\theta_{y,m})$ pendant le mouvement le long de la courbe.

**12.** Procédé selon la revendication 8, dans lequel la vitesse de ladite section poignet est augmentée (a) à la fin de la courbe dans le chemin programmé en ajoutant un écart d'orientation positif dans la première direction (x) et un écart d'orientation négatif dans la deuxième direction (y) vers ladite section poignet.

**13.** Procédé selon la revendication 8 ou 1, dans lequel un chemin pour ladite section poignet (WCP) est limité par la vitesse constante ou presque constante optimisée $(V_{PROG})$ du Point Central d'Outil et pour une ou plusieurs articulations dudit bras manipulateur par une limite de n'importe quel paramètre parmi : un angle d'articulation, une vitesse angulaire, une accélération angulaire, un couple.

**14.** Procédé selon la revendication 13 ou 1, dans lequel un chemin pour ladite WCP est calculé en optimisant un chemin pour ladite section poignet limité par la vitesse constante ou presque constante pour le TCP et en optimisant, par exemple pour obtenir une valeur minimum, un ou plusieurs paramètres parmi : la consommation d'énergie totale pour les articulations de robot impliquées, la consommation d'énergie pondérée pour les articulations de robot impliquées, l'accélération totale pour les articulations impliquées, l'accélération pondérée pour les articulations impliquées, le mouvement angulaire total pour les articulations de robot, le mouvement angulaire pondéré pour les articulations de robot, l'accélération linéaire du point fixe sur le poignet de robot (WCP), l'écart de l'orientation par rapport à l'orientation programmée.

**15.** Procédé selon l'une quelconque des revendications précédentes, dans lequel un ou plusieurs programmes d'ordinateur sont lus par un ordinateur ou un processeur, faisant exécuter par l'ordinateur ou processeur un procédé selon la revendication 1.

**16.** Procédé selon l'une quelconque des revendications précédentes, dans lequel de l'information concernant un Point Central d'Outil et/ou un Point Central de Poignet est affichée sur une interface utilisateur graphique aux fins de programmation, surveillance ou commande dudit robot industriel ou bras manipulateur portant un applicateur de peinture.

**17.** Programme d'ordinateur qui, lorsqu'il est lu dans un ordinateur ou un processeur, fait exécuter par l'ordinateur ou processeur un procédé selon les étapes de l'une quelconque des revendications 1 à 16.

**18.** Support lisible par ordinateur comprenant un programme d'ordinateur qui, lorsqu'il est lu dans un ordinateur ou un processeur, fait exécuter par l'ordinateur ou processeur un procédé selon les étapes de l'une quelconque des revendications 1 à 16.

**19.** Système pour peindre une pièce avec un système de peinture automatisé comprenant un robot industriel ou bras manipulateur (10) pourvu d'une section poignet (12) et portant un applicateur de peinture (11) disposé sur ladite section poignet du bras manipulateur, ledit applicateur de peinture étant adapté pour enduire une surface (13) de ladite pièce, où la peinture est appliquée sur une région sensiblement circulaire ou elliptique de ladite surface, et le centre de ladite région étant défini comme un Point Central d'Outil (4), et où ladite section poignet est adaptée pour être capable d'orienter ledit applicateur de peinture et ledit applicateur de peinture étant déplacé par le bras manipulateur de sorte que le Point Central d'Outil se déplace le long d'un chemin programmé (5) enduisant ainsi une partie de ladite surface, et par un moyen pour commander ledit robot ou bras manipulateur et pour fonctionner selon un chemin programmé, **caractérisé par** un moyen pour calculer ledit chemin programmé (5) comprenant un ou plusieurs tournants de sorte qu'un chemin pris par un point fixe sur le poignet de robot (WCP) au-dessus de ladite surface pendant un tournant dans ledit chemin programmé dévie dans la direction x et/ou dans la direction y par rapport au chemin programmé, et le chemin pris par un point fixe sur le poignet du robot (WCP) est plus court que ledit chemin programmé pris par le Point Central d'Outil (TCP) le long de ladite surface.

**20.** Système selon la revendication 19, comprenant en outre un moyen pour déplacer ladite section poignet (WCP) pendant une partie du mouvement à travers une courbe dans le chemin programmé avec une vitesse $(V_{CIRC})$ qui n'est pas la même vitesse que celle du Point Central d'Outil le long d'une partie sensiblement droite $(V_{PROG})$ du chemin programmé.

**21.** Système selon la revendication 19 ou 20, comprenant en outre un moyen pour commander une vitesse du point fixe sur le poignet de robot (WCP) le long du chemin programmé pour qu'elle soit sensiblement la même que la vitesse $(V_{prog})$ du Point Central d'Outil (TCP) pendant une partie d'un chemin droit et une vitesse $(V_{circ})$ qui est inférieure à la vitesse du Point Central d'Outil pendant une courbe dans le chemin.

**22.** Système selon la revendication 19, comprenant en outre un moyen pour optimiser un paramètre d'orientation $(WCP_{deviation})$ de ladite section poignet pendant le mouvement dans une courbe du chemin programmé sur une valeur différente de la valeur du paramètre d'orientation pendant le mouvement de ladite section poignet le long d'une partie droite du chemin programmé.

23. Système selon la revendication 19, comprenant en outre un moyen pour déplacer ladite section poignet de telle manière qu'un paramètre d'orientation (WCP$_{deviation}$), qui est une mesure d'écart de l'axe de l'applicateur par rapport à la perpendiculaire à ladite surface, est optimisé pendant le mouvement dans le chemin programmé sur une ou plusieurs valeurs différentes de la valeur du paramètre d'orientation pendant le mouvement de ladite section poignet le long d'une partie droite du chemin programmé.

24. Système selon la revendication 19, comprenant un moyen pour optimiser un écart d'orientation de ladite section poignet (WCP) pendant le mouvement dans la courbe du chemin programmé sur une valeur comprise entre un écart négatif et un écart positif.

25. Système selon la revendication 19, comprenant un moyen pour maintenir la vitesse du Point Central d'Outil à une vitesse constante (V$_{PROG}$) ou presque constante pendant le mouvement dans la courbe du chemin programmé.

26. Système selon la revendication 19, comprenant un moyen pour réduire (d) la vitesse de ladite section poignet pendant une approche de la courbe dans le chemin programmé et/ou augmenter (a) la vitesse de ladite section poignet à la fin de la courbe dans le chemin programmé.

27. Système selon la revendication 19, comprenant un moyen pour permettre un écart d'orientation dans une première direction (x) jusqu'à une valeur maximale (θ$_{x,m}$) et/ou permettre un écart d'orientation dans une deuxième direction (y) jusqu'à une valeur maximale (θ$_{y,m}$).

28. Système selon la revendication 19, comprenant un moyen pour optimiser un chemin pour ladite section poignet tout en visant une vitesse constante ou presque constante pour le TCP et pour optimiser, par exemple pour obtenir une valeur minimum, un ou plusieurs paramètres parmi : la consommation d'énergie totale pour les articulations de robot impliquées, la consommation d'énergie pondérée pour les articulations de robot impliquées, l'accélération totale pour les articulations impliquées, l'accélération pondérée pour les articulations impliquées, le mouvement angulaire total pour les articulations de robot, le mouvement angulaire pondéré pour les articulations de robot, l'accélération linéaire du point fixe sur le poignet de robot (WCP), l'écart de l'orientation par rapport à l'orientation programmée.

29. Utilisation d'un système selon l'une quelconque des revendications 19 à 28 pour commander ou programmer un robot industriel pour effectuer n'importe quelle tâche d'application ou d'enduction dans la liste comprenant : l'application d'un matériau fluide conducteur ou non conducteur, l'application d'une peinture, la pulvérisation d'une peinture, la pulvérisation sèche, l'application d'une colle, l'application d'un mastic, l'application d'un mastic contenant du PVC, l'application d'un matériau anti-corrosion, le décapage au sable ou l'application de sable, l'application d'un matériau abrasif, l'application d'une cire.

$V_{prog}$  a

$V_{circ}$

r

Fig 1a

5

$V_{prog}$  d  $V_{circ}$  a

Fig 1b

dist x

v  $V_{prog}$  $V_{prog}$

$V_{circ}$

dist x

Fig 1c

W

T

Fig 1d
Prior Art

W

T

Fig 1e

W

T

Fig 1f

Fig 2

Fig 3

30 | Move WCP and TCP along planned path at constant velocity Vprog

32 | Approaching bend decelerate WCP velocity to Vcirc, allow deviation in y

34 | In bend reduce WCP velocity to Vcirc and allow deviation in x and y

36 | Leaving bend accelerate WCP velocity from Vcirc to Vprog, reduce allowed deviation in y

Fig 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5645884 A